# EUROPEAN PATENT APPLICATION

(11) **EP 1 293 857 A1**
(43) Date of publication of application: **19.03.2003**
(21) Application number: 01307896.9
(22) Date of filing: 17.09.2001
(51) Int. Cl.: G06F 1/00

(54) **Server access control**

(71) Applicant: Caplin Systems Limited, London EC2A 1BR (GB)
(72) Inventor: Caplin, Paul, London W112PY (GB); Tyler, Martin James, London EC1V 3RF (GB)
(74) Representative: Walaski, Jan Filip

(57) **Abstract**

A method of controlling access to a data server, in which a web server receives a request from a client for a web page, the web page being configured to receive data from the data server for display by the client. In response to the request, a program associated with the web server generates a password signed with a private key to provide the client with access to the data server. The corresponding public key has previously been sent to the data server. The password is returned to the client and program code in the web page directs the client to connect to the data server. The data server receives the password and attempts to validate it using the public key received from the web server. Data is sent to the client in the event that the password is successfully validated.

## Description

### Field of the Invention

This invention relates to the field of server access control, particularly but not exclusively to a method of controlling access to a server which provides real-time information over the Internet, for incorporation into a website downloaded by a client from a separate server.

### Background

The World Wide Web, referred to herein as the web, is the most widely used Internet application. It is based on hypertext, which can be thought of as text which is not constrained to be sequential. The web can handle much more than just text, so the more general term hypermedia is used to cover all types of content, including but not limited to pictures, graphics, sound and video. While the primary language for representing hypermedia content on the web is HTML, other markup languages are constantly developing, including, for example, XML. The term hypermedia as used herein is therefore not intended to be limited to any particular web language, nor indeed to the web, but should be interpreted as a general term which can also refer to content on public or private networks which operate according to Hypertext Transfer Protocol (HTTP) or other similar protocols.

The provision of real-time data, such as financial data, on web pages, is becoming increasingly common. One way of providing such data is for a user to access a website and download a web page, the web page containing program code which permits the user to connect to another server which provides the real-time data. The program code is arranged to embed the received real-time data into the web page.

The intention behind the arrangement described above is that a user always connects to the website to gain access to the real-time data, so that, for example, a commercial charging arrangement can be made between the website operator and the real-time data server operator based on access requests to the data server by the user. However, by examining the program code, a sophisticated user may be able to access the data server directly without needing to go via the website. The data server may wish to prevent such access, since it represents a drain on its resources and since it has no charging arrangement with the user.

Furthermore, to ensure that any charging arrangement between server operators is fair, the web server operator would benefit from an accounting mechanism by which the data server operator can demonstrate to it that users accessing the data server have done so via the web server.

### Summary of the Invention

According to the present invention, there is provided a method of controlling access to a data server, comprising the steps of receiving, at a hypermedia server, a request from a client for a hypermedia document, said hypermedia document being configured to receive data from the data server for use by the client; in response to said request, generating a password to provide the client with access to the data server, receiving the password at the data server, attempting to validate the password and in response to a successfully validated password, providing the data from the data server to the client.

The password can be generated using a public key encryption scheme.

The method can comprise, prior to generating the password, the steps of generating a public and private key pair, storing the private key at a component on a hypermedia server-side for use in generating the password and sending the public key to a component on a data server-side for use in validating the password.

The method can further comprise signing the password with the private key.

Since the private key is held at the hypermedia server-side of the system, the client's signed password can only be generated at the hypermedia server-side, so that the data server operator can prove that a password which has been successfully validated with a public key held at the data server-side can only have originated from the hypermedia server-side. This means that the client has obtained the password by accessing the hypermedia server first.

According to the invention, there is further provided a method of authenticating a client to a data server, comprising the steps of receiving a resource request from the client at a resource server, in response to the resource request, generating a password for use by the client in establishing a connection to the data server and sending the password to the client, wherein the data server is configured to validate the password in response to a connection request from the client.

According to the invention, there is also provided hypermedia server apparatus configured to provide information to permit a client to connect to a data server, comprising means for receiving a request from a client for a hypermedia document, said hypermedia document being configured to receive data from the data server for use by the client and means for generating a password in response to said request, to provide the client with access to the data server, wherein the apparatus is further arranged to generate information to be provided to the data server to enable the data server to validate the generated password.

The invention also provides data server apparatus for providing data to a client in response to a request from the client, the apparatus comprising means for storing information for validating a password generated by a remote server apparatus, means for receiving a client request, said request including a password and means for validating the password in dependence on information relating to the identity of the remote server apparatus.

In a further aspect, the invention provides a system for controlling access to a data server, the system comprising hypermedia server apparatus for receiving a request from a client for a hypermedia document, said hypermedia document being configured to receive data from the data server for use by the client, the hypermedia server apparatus including means for generating a password in response to said request, to provide the client with access to the data server and data server apparatus for receiving a password from the client, the data server apparatus including means for validating the password and means for providing the data from the data server to the client in response to a successfully validated password.

### Brief Description of the Drawings

Embodiments of the invention will now be described, by way of example, with reference to the accompanying drawings, in which:
Figure 1 illustrates a conventional Internet connection scheme on which a method of access control according to the invention can be implemented;
Figure 2 illustrates an example web page which incorporates streaming data from a data server separate from the web server which provides the page;
Figure 3 is a schematic diagram of a conventional computer;
Figure 4 is a schematic diagram of a system according to the invention;
Figure 5 is a flow diagram illustrating the generation of a public/private key pair and subsequent key management process;
Figure 6 is a flow diagram illustrating the processes occurring on a request by a client for the web page of Figure 2; and
Figure 7 is a flow diagram illustrating the processes occurring when the client requests real-time data from the data server.

### Detailed Description

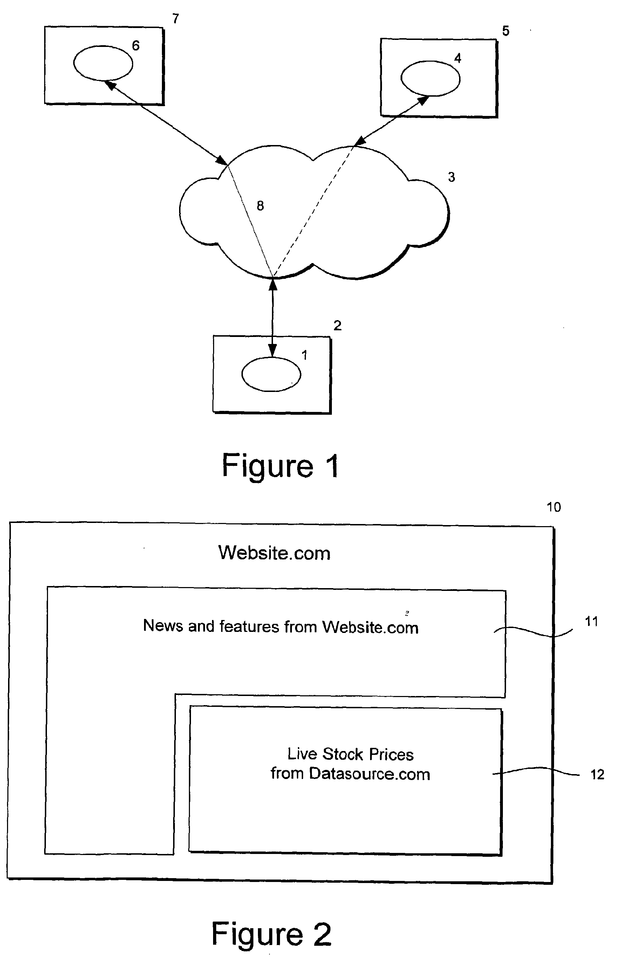

Figure 1 illustrates a system on which the invention can be implemented in which a user uses browser software 1 running on a computer 2 to download, via the Internet 3, web pages hosted by web server software 4 running on a first server machine 5. The browser software 1, for example, Internet Explorer™ or Netscape Navigator™, is referred to herein as a web client or client 1, while the web server software 4 is referred to herein as a web server or server 4.

Web pages which are downloadable by the client 1 can be configured to include real-time information from a push data server 6 running on a second server machine 7, also referred to herein as the data server machine 7, which establishes a substantially continuous connection 8 with the client 1 so that data can be pushed from the server 6 to the client 1 for display within a downloaded web page, without the connection needing to be opened and closed every time data needs to be transferred. For example, referring to Figure 2, the user downloads a web page 10 from server address website.com. The web page 10 includes a first section 11 which originates from the web server 4 as well as a second section 12 giving access to live share prices, which are obtained from a website address datasource.com hosted by push data server 6. The insertion of real-time data into a web page from a server separate from the web server providing the page is a well-known technique. For example, the web page 10 can include the program code necessary to embed the real-time data from the data server 6, for example in the form of a Java™ applet. Reference is further directed to the RTTP server-push protocol developed by Caplin Systems Ltd and to our co-pending application number 01303766.8, the disclosure of which is incorporated herein by reference.

It will be understood that the client computer 2 and server machines 5, 7 are conventional commercially available computers having all of the hardware, operating system software and application software required to perform their respective functions.

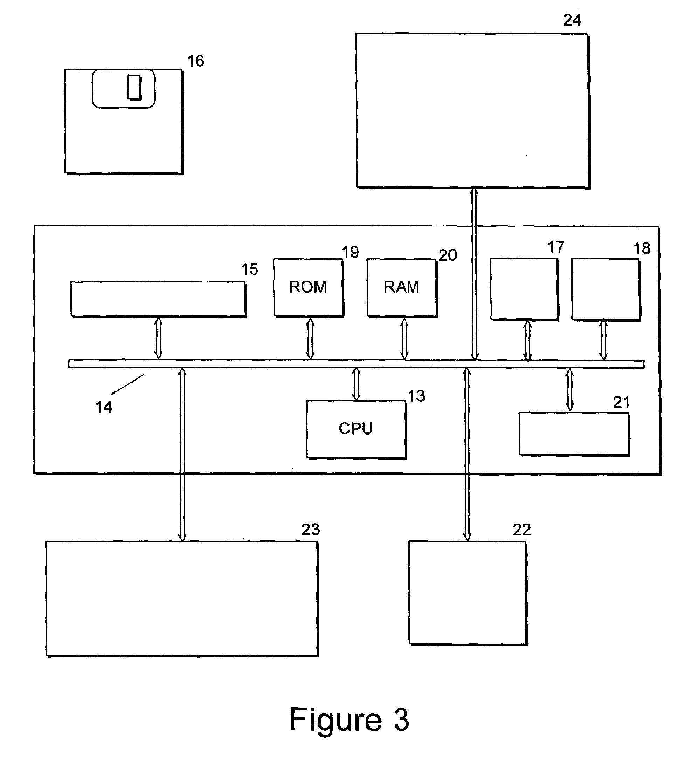

For example, referring to Figure 3, the client computer 1 and server computers 5, 7 each comprise a central processing unit (CPU) 13 for executing computer programs and managing and controlling the operation of the computer. The CPU 13 is connected to a number of devices via a bus 14, the devices including a read/write device 15, for example a floppy disk drive for reading and writing data and computer programs to and from a removable storage medium such as a floppy disk 16, a storage device 17, for example a hard disk drive for storing system and application software, a DVD/CD-ROM drive 18 and memory devices including ROM 19 and RAM 20. The computer further includes a network card 21 for interfacing to a network 3 and user input/output devices, such as a mouse 22, keyboard 23 and display 24. It will be understood by the skilled person that the above described architecture is not limiting, but is merely an example of a typical computer architecture.

As a matter of commercial practice, the operator of the data server 6 which provides the real-time information requires payment for the provision of the service and provides the service based on a licensing agreement. For example, the operator of the web server 4 is authorised to embed the real-time information from the data server 6 in its website on the basis of a multi-user licence, giving individual users of the website access to the data server 6 subject to the maximum number of licences. In accordance with the invention, an authorisation mechanism is provided to control access to the data server 6.

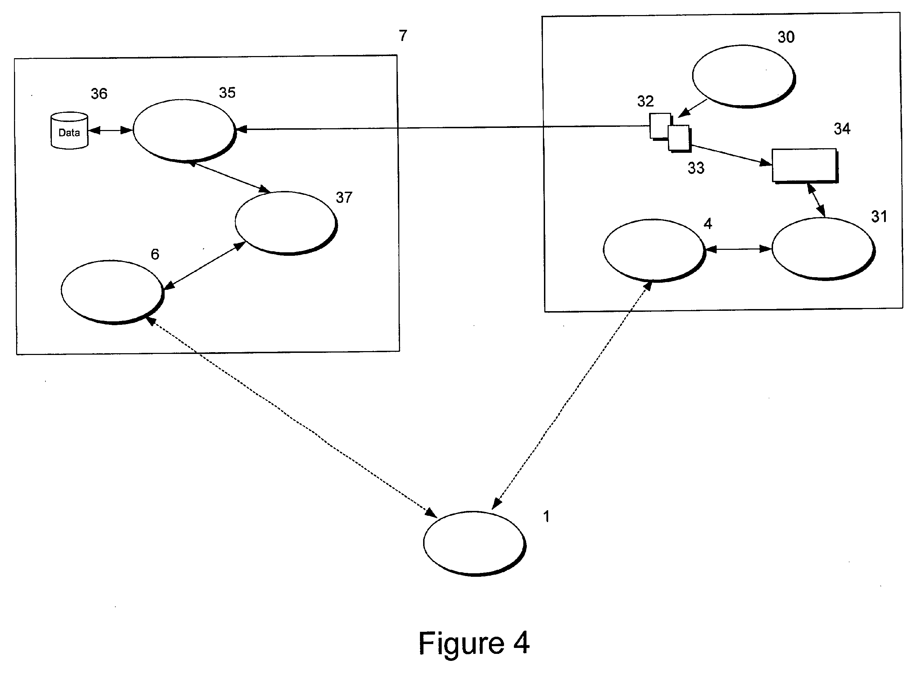

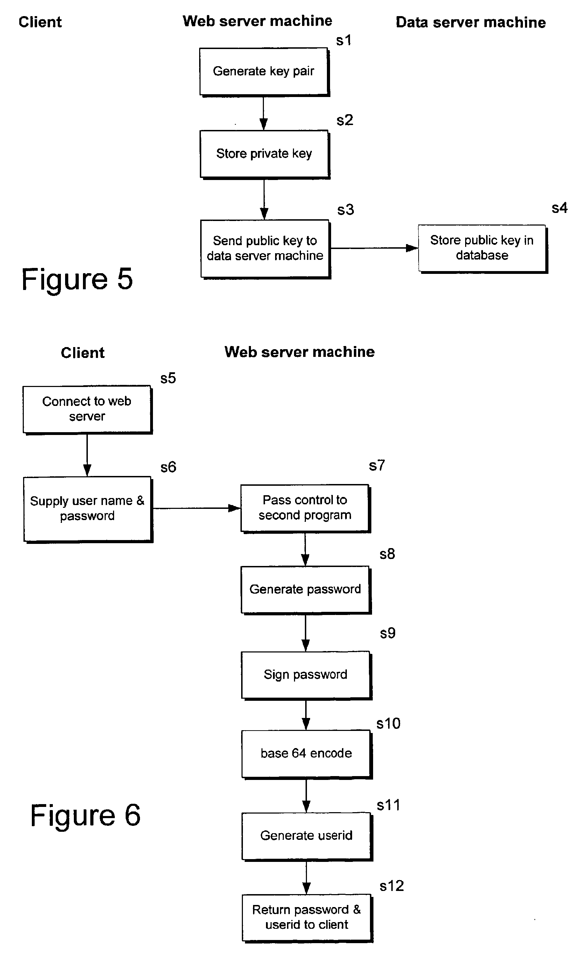

In one embodiment of the invention illustrated in Figure 4, the first server machine 5 includes first and second Java™ programs 30, 31. Referring to Figures 4 and 5, the first program 30 is a key generator for generating keys to be used in a public key encryption scheme, for example using conventional RSA encryption. The first program 30 therefore generates a public/private key pair 32, 33 (step s1), stores the private key 33 in memory 34 (step s2) so that it is available to the second program 31 and makes the public key 32 available to the data server 6, for example by electronically sending it to the second server machine 7 (step s3). While this example is being explained by reference to a single data server 6, it will be understood that the first program 30 has the capability to generate a plurality of key pairs to enable authentication of the website to a plurality of data servers 6. The function of the second program 31 will be explained in more detail below.

At the second server machine 7, a third program 35 stores the public key 32 from the first server machine 5 in a database 36 (step s4). It will be understood that the database 36 is capable of storing public keys from a plurality of web server machines, to enable real-time data to be provided to a plurality of websites. The second server machine 7 also includes a fourth program 37, the functionality of which will be described in detail below.

While the first to fourth programs 30, 31, 35, 37 have been described as being located within respective server machines 5, 7, the programs can be distributed among separate physical devices in communication with one another. The components 4, 30, 31, 34 described as being within the first server machine 5 are therefore also referred to herein as being on a hypermedia server-side of the system, while the components 6, 35, 36, 37 described as being within the second server machine 7 are also referred to herein as being on a data server-side of the system.

Referring to Figure 6, a user connects to a selected web page using his browser 2 (step s5). He supplies a username and password which has been previously set up for him (step s6), if this is required by the web server 4. When the user successfully gains access to the web page, the web server 4 passes control to the second program 31 (step s7). The second program 31 generates and concatenates a number of components into a string to form a second password (step s8). The second password is referred to herein as a dynamic password, since it is created only in response to a client access request.

The components making up the dynamic password string include:
(i) a sequence number, which is incremented on each request for a dynamic password, so that each dynamic password is unique;
(ii) a datestamp, which allows the dynamic password to have a limited lifespan, so that it cannot be captured and used at a later date; and
(iii) an optional text string, which can assist with logging.

The second program 31 extracts the stored private key 33 from the memory 34 and uses it to sign the dynamic password (s9). Signing involves the known technique of generating a hash, encrypting it and appending the hash to the password string. The signed string is then base 64 encoded (s10). This is done to allow the string to be inserted into an HTML document and to prevent the string from containing any characters which could be interpreted as control characters during the transfer process. The program 31 also generates a user identity code, referred to herein as a userid (step s11), which comprises a name associated with the website, for example website.com, to enable the second server machine 7 to identify the public key 32 with which it should attempt validation. The userid may also contain an optional text string, to help with logging. In an alternative embodiment, the username and password with which the user logged into the web server 4 are used in the authentication procedure, for example by incorporating a portion of the username and/or password into the web server userid.

The signed dynamic password and userid are returned to the client 1 together with the requested web page, which includes the program code necessary to embed the real-time data from the data server 6, for example in the form of a Java™ applet (step s12). In further examples of the invention, as an alternative to being provided by the web server 4, the program code required for embedding the real-time data can come from the data server 6, from a combination of both web server and data server or from another web server or several web servers altogether. In this case, the web server 4 may therefore return the program code or a reference to its location to the client 1.

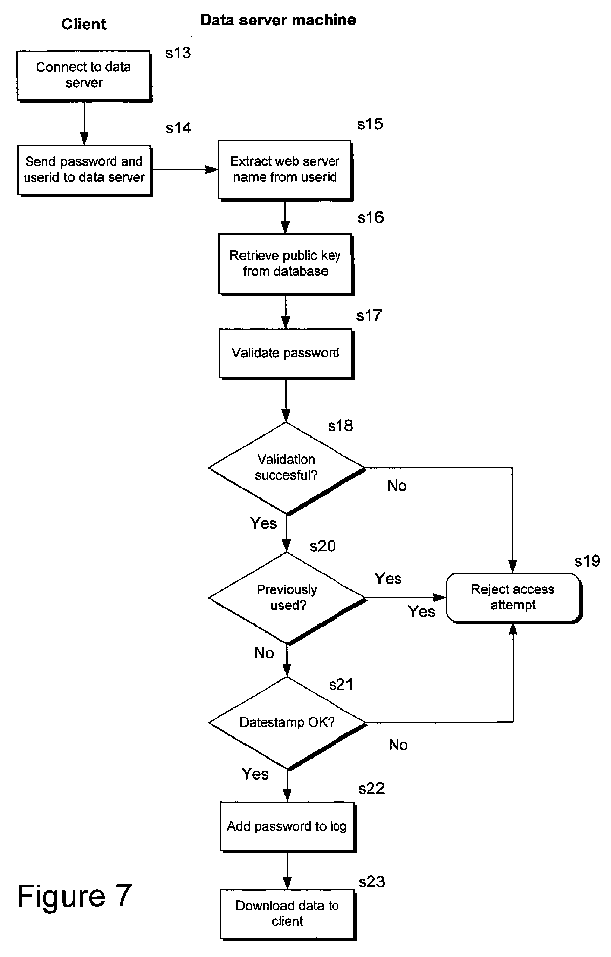

Referring to Figures 4 and 7, the program code in the downloaded web page automatically redirects the client 1 to connect to the data server 6 (step s13). The dynamic password and userid are sent to the data server 6 with the access request (step s14). The fourth program 37 at the second server machine 7 extracts the website name from the userid (step s15) and liaises with the third program 35 to retrieve the corresponding public key 32 from the database 36 (step s16). It then attempts to validate the dynamic password using the public key 32 (steps s17, s18). If the dynamic password was created using the private key 33 which corresponds to the public key 32, then validation will be successful. If not, the access attempt is rejected (step s19).

If validation is successful, a check is made against a log of previously used dynamic passwords, to ensure the dynamic password has not been used previously (step s20). If it has, the access attempt is again rejected (step s19). If it has not, the datestamp is examined to detemine whether the dynamic password was created within a predetermined time window, configurable by each website (step s21). If outside the window, the access attempt is again rejected (step s19). For example, when a user terminates its account with the website or moves to a different service, the dynamic password cannot be used after the predetermined time window has expired. If within the window, the dynamic password is acceptable and is added to the previously used dynamic password log to prevent future re-use (step s22). The required data is then downloaded to the client 1 (step s23).

The method described above permits the second server to prove to the first server that users of the second server have come via the first server's web site, since only the first server can validly generate the user's dynamic password.

While the invention has been described primarily in relation to real-time data being embedded in a web page, it applies in any situation where a client is directed by one server to log on to a second server, where access control criteria are agreed on between the first and second servers.

## Claims

1. A method of controlling access to a data server, comprising the steps of:
receiving, at a hypermedia server, a request from a client for a hypermedia document, said hypermedia document being configured to receive data from the data server for use by the client;
in response to said request, generating a password to provide the client with access to the data server;
receiving the password at the data server;
attempting to validate the password; and
in response to a successfully validated password, providing the data from the data server to the client.

2. A method according to claim 1, wherein the password is generated using a public key encryption scheme.

3. A method according to claim 2, further comprising, prior to generating the password, the steps of:
generating a public and private key pair;
storing the private key at a component on a hypermedia server-side for use in generating the password; and
sending the public key to a component on a data server-side for use in validating the password.

4. A method according to claim 3, including using the private key to sign the password.

5. A method according to any one of claims 1 to 4, including embedding the data received from the data server within the hypermedia document.

6. A method according to any one of the preceding claims, wherein the hypermedia server comprises a web server.

7. A method of authenticating a client to a data server, comprising the steps of:
receiving a resource request from the client at a resource server;
in response to the resource request, generating a password for use by the client in establishing a connection to the data server; and
sending the password to the client;
wherein the data server is configured to validate the password in response to a connection request from the client.

8. A method according to claim 7, including generating a public/private key pair in accordance with a public key encryption scheme.

9. Hypermedia server apparatus configured to provide information to permit a client to connect to a data server, comprising:
means for receiving a request from a client for a hypermedia document, said hypermedia document being configured to receive data from the data server for use by the client;
means for generating a password in response to said request, to provide the client with access to the data server;
wherein the apparatus is further arranged to generate information to be provided to the data server to enable the data server to validate the generated password.

10. Hypermedia server apparatus according to claim 9, wherein the information comprises a public key corresponding to a private key used to sign the password.

11. Data server apparatus for providing data to a client in response to a request from the client, the apparatus comprising:
means for storing information for validating a password generated by a remote server apparatus;
means for receiving a client request, said request including a password;
means for validating the password in dependence on information relating to the identity of the remote server apparatus.

12. Data server apparatus according to claim 11, wherein the client request includes a user identity code which includes information identifying the remote server apparatus.

13. Data server apparatus according to claim 11 or 12, wherein the password validating information comprises a public key corresponding to a private key used to generate the password.

14. Data server apparatus according to any one of claims 11 to 13, further comprising a database for storing a plurality of public keys, each relating to a different hypermedia server apparatus.

15. A system for controlling access to a data server, the system comprising:
hypermedia server apparatus for receiving a request from a client for a hypermedia document, said hypermedia document being configured to receive data from the data server for use by the client, the hypermedia server apparatus including means for generating a password in response to said request, to provide the client with access to the data server;
data server apparatus for receiving a password from the client, the data server apparatus including means for validating the password and means for providing the data from the data server to the client in response to a successfully validated password.

16. A system according to claim 15, wherein the password is generated using a public key encryption scheme.

17. A system according to claim 16, wherein the hypermedia server apparatus further comprises:
means for generating a public and private key pair;
means for storing the private key at a component on a hypermedia server-side for use in generating the password; and
means for sending the public key to a component on a data server-side for use in validating the password.

18. A system according to any one of claims 15 to 17, wherein the password includes a sequence number.

19. A system according to claim 18, wherein the hypermedia server apparatus includes means for incrementing the sequence number on each request for a password.

20. A system according to any one of claims 15 to 19, wherein the password includes a datestamp.

21. A system according to any one of claims 15 to 20, wherein the data comprises real-time data.
